# EUROPÄISCHE PATENTSCHRIFT

(11) **EP 2 517 224 B1**
(45) Veröffentlichungstag und Bekanntmachung des Hinweises auf die Patenterteilung: **30.07.2014**
(21) Anmeldenummer: 11769817.5
(22) Anmeldetag: 27.09.2011
(51) Int. Cl.: H01J 61/44, C09K 11/66, C09K 11/78, C09K 11/81, C09K 11/80, C09K 11/64

(54) **LEUCHTSTOFFMISCHUNG UND LEUCHTSTOFFLAMPE ZUR LEBENSMITTELBELEUCHTUNG**
PHOSPHOR MIXTURE AND FLUORESCENT LAMP FOR ILLUMINATING FOOD
MÉLANGE DE SUBSTANCES LUMINESCENTES ET LAMPE FLUORESCENTE POUR L'ÉCLAIRAGE DE DENRÉES ALIMENTAIRES

(30) Priorität: 01.10.2010 DE 102010041856
(43) Veröffentlichungstag der Anmeldung: 31.10.2012
(73) Patentinhaber: OSRAM GmbH, 80807 München (DE)
(72) Erfinder: BARNA, Sabrina, 86663 Bäumenheim (DE); GOEBEL, Nina, 86368 Gersthofen (DE); HELD, Claudia, Aindling (DE); KONRAD, Armin, 86845 Großaitingen (DE); SCHIPLAGE, Matthias, Gersthofen (DE); SCHOENHEITS, Markus, 86159 Augsburg (DE)
(86) Internationale Anmeldenummer: PCT/EP2011/066733
(87) Internationale Veröffentlichungsnummer: WO 2012/041832

(56) Entgegenhaltungen:
- US-A1- 2004 095 058
- US-A1- 2008 265 207
- US-B1- 6 452 324
- DATABASE WPI Week 200015 Thomson Scientific, London, GB; AN 2000-166063 XP002666521, -& JP 2000 021353 A (TOSHIBA LIGHTECH KK) 21. Januar 2000 (2000-01-21)

## Beschreibung

### Technisches Gebiet

Die vorliegende Erfindung betrifft Leuchtstoffmischungen und Leuchtstofflampen, die insbesondere zur Beleuchtung von Fleisch- und Wurstwaren eingesetzt werden können, jedoch auch für die Beleuchtung anderer Lebensmittel wie etwa Gemüse geeignet sind.

### Stand der Technik

Da der subjektive Eindruck des Betrachters bei Präsentation und Verkauf solcher Waren stark von dem farblichen Erscheinungsbild der Ware abhängt, werden zur Beleuchtung entsprechender Präsentations- und Verkaufsflächen Lampen mit besonderen Farbwiedergabeeigenschaften eingesetzt.

Für Fleisch- und Wurstwaren ist bekannt, dass mit zunehmender Dauer der Lagerung das Reflexionsvermögen in den Randbereichen des sichtbaren Spektrums, also im roten und blauen Spektralbereich, allmählich zurückgeht. Dieses nachlassende Reflexionsvermögen kann für das Auge des Betrachters durch eine gegenüber Leuchtstofflampen für die Allgemeinbeleuchtung überhöhte Emission in den entsprechenden Bereichen ausgeglichen werden; man spricht von einem Schönungseffekt.

Aus der JP 2000 021353 A ist eine Leuchtstoffmischung für den Einsatz bei der Beleuchtung von Fleischwaren bekannt, bei der ein tiefrot emittierender Leuchtstoff zum Einsatz kommt.

Die US 2004/095058 A1 ist eine elektrodenlose Niederdruckentladungslampe bekannt, die Farbverschiebungen aufgrund von Degradationserscheinungen der Leuchtstoffmischung verhindert.

Aus der US 2008/265207 A1 ist eine Leuchtstoffmischung für eine Niederdruckentladungslampe mit hoher Farbtemperatur bekannt.

Der vorliegenden Erfindung liegt das Problem zugrunde, eine besonders vorteilhafte Leuchtstoffmischung für Leuchtstofflampen zur Beleuchtung von Lebensmitteln anzugeben.

Erfindungsgemäß wird diese Aufgabe gelöst durch eine Leuchtstoffmischung mit:
- einem roten Leuchtstoff mit einem Emissionsmaximum zwischen 590 und 630 nm insbesondere bei einer Halbwertsbreite von höchstens 60 nm;
- einem grünen Leuchtstoff mit einem Emissionsmaximum zwischen 520 und 580 nm insbesondere bei einer Halbwertsbreite von höchstens 60 nm;
- einem 5 bis 25 gew.-%-igen Anteil, wie in der gesamten Offenbarung bezogen auf die Leuchtstoffmischung, an mit Europium dotiertem Bariummagnesiumaluminat (BaMgAl₁₀O₁₇:Eu) als blauem Leuchtstoff;
- einem zusätzlichen tiefroten Leuchtstoff mit einem Emissionsmaximum zwischen 630 und 680 nm bei einer Halbwertsbreite zwischen 10 und 150nm, wobei
der zusätzliche tiefrote Leuchtstoff mit Mangan dotiertes Magnesiumfluorgermanat mit einem 3 bis 20 gew.-%-igen Anteil an der Leuchtstoffmischung und mit Cerium und Mangan dotiertes Gadoliniumzinkmagnesiumpentaborat mit einem 8 bis 42 gew.-%-igen Anteil an der Leuchtstoffmischung ist.

Die Eu²⁺-Aktivierung des Bariummagnesiumaluminats führt zu einer breitbandigen Emission zwischen 400 nm und 500 nm, wodurch ein in diesem Spektralbereich verringertes Reflexionsvermögen der zu beleuchtenden Ware ausgeglichen werden kann. Dazu beträgt die Obergrenze des Bariummagnesiumaluminatanteils in dieser Reihenfolge zunehmend bevorzugt 25, 24, 23, 22, 21, 20, 19, 18 Gew.-% und die Untergrenze in dieser Reihenfolge zunehmend bevorzugt 5, 6, 7, 8, 9, 10, 11, 12 Gew.-%.

Als Alternative zu mit Europium aktiviertem Bariummagnesiumaluminat wäre prinzipiell etwa auch Sb³⁺ in einer Chlorapatitmatrix denkbar, also ein blauer Halophosphatleuchtstoff.

Die Erfinder haben jedoch festgestellt, dass solche Halophosphate Quecksilber sorbieren können, wodurch beispielsweise im Falle einer Quecksilberdampflampe das eigentlich für die Entladung und damit zur Lichterzeugung vorgesehene Quecksilber über eine längere Betriebsdauer von dem Halophosphatleuchtstoff aufgezehrt wird und damit nicht mehr für die Lichterzeugung zur Verfügung steht. Um dennoch eine Lebensdauer von mehreren tausend Stunden zu gewährleisten, muss der anfängliche Quecksilbergehalt entsprechend erhöht werden, und zwar auf bis zu 30 mg pro Lampe. Damit ist mehr als zehnmal soviel Quecksilber in der Lampe enthalten als zumindest anfänglich benötigt und ist die Belastung mit dem Schwermetall dann auch im Entsorgungsfall entsprechend hoch.

Durch die erfindungsgemäße Verwendung von Bariummagnesiumaluminat wird die von der Leuchtstoffmischung aufgezehrte Quecksilbermenge hingegen vorteilhafterweise deutlich reduziert, es kann also im Wesentlichen nur die tatsächlich für die Entladung benötigte Menge eingestellt werden.

Der rote Leuchtstoff mit einem oberhalb von in dieser Reihenfolge zunehmend bevorzugt 590, 592, 594, 596, 598, 600 nm und unterhalb von in dieser Reihenfolge zunehmend bevorzugt 630, 628, 626, 624, 622, 620 nm liegenden Emissionsmaximum mit insbesondere einer Halbwertsbreite von höchstens in dieser Reihenfolge zunehmend bevorzugt 60, 50, 40, 30, 20 nm gleicht dann ein im roten Spektralbereich verringertes Reflexionsvermögen der zu beleuchtenden Ware aus. Ober- und Untergrenzen sind in der gesamten Offenbarung als voneinander und von weiteren Werten, wie etwa jenen der Halbwertsbreite, unabhängig offenbart zu betrachten.

"Emissionsmaximum" bezeichnet einen Maximalwert im spektralen Intensitätsverlauf, wobei der Wert vorrangig in Bezug auf einen bestimmten Ausschnitt des Spektrums und nicht notwendigerweise in Bezug auf den gesamten sichtbaren Bereich maximal ist. Es liegt dann jedenfalls ein lokales Maximum in dem angegebenen Intervall und gegebenfalls in Abhängigkeit von der Halbwertsbreite ein unter Umständen nicht unerheblicher Teil der Intensitätsverteilung um das Emissionsmaximum außerhalb davon.

Der grüne Leuchtstoff hat ein Emissionsmaximum oberhalb von in dieser Reihenfolge zunehmend bevorzugt 520, 524, 528, 532, 536, 540 nm und unterhalb von in dieser Reihenfolge zunehmend bevorzugt 580, 576, 572, 568, 564, 560 nm insbesondere bei einer Halbwertsbreite von höchstens in dieser Reihenfolge zunehmend bevorzugt 60, 50, 40, 30, 20 nm. Der grüne Farbanteil gleicht das Spektrum dahingehend aus, dass ein zu starker Schönungseffekt mit einer übertriebenen Betonung des roten und blauen Spektralbereichs vermieden wird. Ohne die Beigabe des grünen Farbstoffs hätte das Licht zudem eine purpurne Farbe und wäre zur Beleuchtung anderer Waren, die etwa in einer Gemischtwarentheke zusammen mit Fleisch- und Wurstwaren angeboten werden können, ungeeignet.

Erfindungsgemäß wird ein zusätzlicher tiefroter Leuchtstoff mit einem Emissionsmaximum oberhalb von in dieser Reihenfolge zunehmend bevorzugt 630, 632, 634, 636, 638, 640 nm und unterhalb von in dieser Reihenfolge zunehmend bevorzugt 680, 676, 672, 668, 664, 660 nm vorgesehen; die Halbwertsbreite beträgt insbesondere mindestens in dieser Reihenfolge zunehmend bevorzugt 10, 14, 18, 22, 26, 30, 34, 38 nm und höchstens in dieser Reihenfolge zunehmend bevorzugt 150, 146, 142, 138, 134, 130 nm.

Durch den zusätzlichen Leuchtstoff wird der rote Spektralbereich weiter ergänzt, sodass insbesondere der spezielle Farbwiedergabeindex für gesättigtes Rot R₉ verbessert werden kann.

Hierfür wird vorzugsweise Mn⁴⁺-aktiviertes Magnesiumfluorgermanat (Mg₄FGeO_{5,5} : Mn) mit einem Anteil an der Leuchtstoffmischung von mindestens in dieser Reihenfolge zunehmend bevorzugt 3, 4, 5, 6, 7, 8 Gew.-% und höchstens in dieser Reihenfolge zunehmend bevorzugt 20, 19, 18, 17, 16, 15 Gew.-% vorgesehen.

Die Erfinder haben festgestellt, dass insbesondere mit der Kombination von Bariummagnesiumaluminat und Magnesiumfluorgermanat gute Werte für die allgemeine Farbwiedergabe (Rₐ ∼ 85) bei einer gleichzeitig sehr guten Wiedergabe von gesättigtem Rot (R₉ ∼ 90) erzielt werden können. Die Analyse von Spektren zeigt, dass hierfür ein Überlapp der Bariummagnesiumaluminatemission mit der Magnesiumfluorgermanatanregung ursächlich ist; dadurch wird einerseits das blaue Spektrum (BaMgAl₁₀O₁₇:Eu) verändert und andererseits die tiefrote Anregung (MgFGeO_{5,5}:Mn) verstärkt. Im Ergebnis werden die für die vorliegend adressierte Anwendung relevanten Farbwiedergabeindizes positiv beeinflusst.

In Ergänzung zu dem Magnesiumfluorgermanat wird ein mit Cerium und Mangan dotiertes Gadoliniumzinkmagnesiumpentaborat (Gd(Zn,Mg)B₅O₁₀:Ce,Mn) mit einem Anteil an der Leuchtstoffmischung von mindestens in dieser Reihenfolge zunehmend bevorzugt 8, 9, 10, 11, 12, 13, 14 Gew.-% und höchstens in dieser Reihenfolge zunehmend bevorzugt 42, 41, 40, 39, 38, 37, 36 Gew.-% vorgesehen. Generell sind bei sämtlichen Leuchtstoffen die jeweiligen Gew.-%-Angaben auch als für den verallgemeinerten, durch Angabe der spektralen Eigenschaften charakterisierten Leuchtstoffbegriff offenbart zu sehen.

Sofern nur einer der beiden zusätzlichen tiefroten Leuchtstoffe vorliegt, kann besonders bevorzugt die Untergrenze des Magnesiumfluorgermanatanteils in dieser Reihenfolge zunehmend bevorzugt 9, 10, 11, 12, 13 Gew.-% betragen und die Untergrenze des Gadoliniumzinkmagnesiumpentaboratanteils in dieser Reihenfolge zunehmend bevorzugt 25, 26, 27, 28, 29 Gew.-%.

Bevorzugte Ausgestaltungen der Erfindung sind in den abhängigen Ansprüchen angegeben, wobei wie in der gesamten Offenbarung nicht im Einzelnen zwischen der Beschreibung der Leuchtstoffmischung und einer entsprechenden Entladungslampe sowie deren Verwendung unterschieden wird; die Offenbarung ist implizit im Hinblick auf sämtliche Kategorien zu verstehen.

In weiterer Ausgestaltung wird das Emissionsmaximum des roten Leuchtstoffs zwischen 590 nm und 630 nm durch eine Eu³⁺-Emission erreicht, wobei das Europium in einer Matrix aus Yttriumoxid (Y₂O₃:Eu), Gadoliniumoxid (Gd₂O₃:Eu) bzw. einem Mischkristall der beiden ((Y,Gd)₂O₃:Eu) eingebettet sein kann; auch eine Mischung der Leuchtstoffe ist möglich.

Der Anteil des roten Europium-Leuchtstoffs bzw. der roten Europium-Leuchtstoffmischung an der (gesamten) Leuchtstoffmischung beträgt dabei mindestens in dieser Reihenfolge zunehmend bevorzugt 10, 12, 14, 16, 18, 20, 22, 24 Gew.-% und höchstens in dieser Reihenfolge zunehmend bevorzugt 60, 58, 56, 54, 52, 50, 48 Gew.-%.

Bei einer weiteren Ausführungsform wird als grüner Leuchtstoff mit Terbium und Cerium dotiertes Lanthanphosphat (LaPO₄:Tb,Ce oder mit Terbium dotiertes Cermagnesiumaluminat (CeMgAl₁₁O₁₉:Tb) oder eine Mischung der beiden vorgesehen. Der Anteil des grünen Leuchtstoffs bzw. der grünen Leuchtstoffe an der Leuchtstoffmischung beträgt dabei mindestens in dieser Reihenfolge zunehmend bevorzugt 10, 12, 14, 16, 18, 20, 22, 24, 26 Gew.-% und höchstens in dieser Reihenfolge zunehmend bevorzugt 40, 38, 36, 34, 32, 30, 28 Gew.-%.

Die Erfindung bezieht sich auch auf eine Entladungslampe mit einem Entladungsgefäß, in welchem Entladungslicht erzeugt werden kann, und einer zuvor genannten Leuchtstoffmischung zum Konvertieren des Entladungslichts. Die Leuchtstoffmischung kann beispielsweise innenseitig an dem Entladungsgefäß vorgesehen sein, sodass das Entladungslicht mit seinem typischerweise ultravioletten Spektrum auch innerhalb des Entladunsgefäßes konvertiert wird und somit kein speziell UV-durchlässiges Glas vorgesehen werden muss.

Da von der erfindungsgemäßen Leuchtstoffmischung nur wenig bzw. kein Quecksilber aufgenommen wird, kann der Quecksilbergehalt in dem Entladungsgefäß trotz des direkten Kontakts mit der innenseitigen Leuchtstoffmischung auf im Wesentlichen den Wert eingestellt werden, der tatsächlich für die Entladung benötigt wird.

Die Erfindung bezieht sich somit weiter bevorzugt auf eine Niederdruckgasentladungslampe mit einer Füllung aus einem Grundgas, beispielsweise einem Edelgas oder einem Edelgasgemisch, und einer kleinen unter Betriebsbedingungen dann in der Dampfphase vorliegenden Menge Quecksilber.

In weiterer Ausgestaltung beträgt die Quecksilbermenge in dem Entladungsgefäß höchstens in dieser Reihenfolge zunehmend bevorzugt 4, (3,5), 3, (2,5), 2 mg.

Aufgrund der nur geringen Quecksilberaufnahme durch die erfindungsgemäße Leuchtstoffmischung bleibt die für die Entladung zur Verfügung stehende Quecksilbermenge im Wesentlichen unverändert; die Lebensdauer der Entladungslampe beträgt gemäß einer weiteren Ausführungsform mindestens in dieser Reihenfolge zunehmend bevorzugt 16.000, 17.000, 18.000, 19.000, 20.000 Stunden.

In weiterer Ausgestaltung ist die Lichtausbeute einer erfindungsgemäßen Entladungslampe größer als in dieser Reihenfolge zunehmend bevorzugt 60, 61, 62, 63, 64, 65 1m/W.

Da die erfindungsgemäße Leuchtstoffmischung neben den für den Schönungseffekt maßgeblichen roten und blauen Leuchtstoffen auch einen grünen Leuchtstoff enthält, kann der allgemeine Farbwiedergabeindex Rₐ verbessert werden; dieser beträgt bei bevorzugten Ausführungsformen mindestens in dieser Reihenfolge zunehmend bevorzugt 75, 76, 77, 78, 79, 80.

Weiter bevorzugt beträgt der spezielle Farbwiedergabeindex R₉ für gesättigtes Rot mindestens in dieser Reihenfolge zunehmend bevorzugt 83, 84, 85, 86, 87, 88. Es wird also vorzugsweise der von helleren Pastelltönen bestimmte allgemeine Farbwiedergabeindex Rₐ durch einen kräftigen Rotton ergänzt, was bei der Beleuchtung von Fleisch- und Wurstwaren zu optisch ansprechenden Ergebnissen führt.

Bei einer weiteren Ausführungsform wird die Leuchtstoffmischung so eingestellt, dass der Farbton der Entladungslampe im CIE-Normvalenzsystem an einer X-Position von mindestens in dieser, Reihenfolge zunehmend bevorzugt (0,375), (0,376), (0,377) und höchstens in dieser Reihenfolge zunehmend bevorzugt (0,395), (0,394), (0,393) liegt; der Y-Wert beträgt hierbei mindestens in dieser Reihenfolge zunehmend bevorzugt (0,315), (0,316), (0,317) und höchstens in dieser Reihenfolge bevorzugt (0,335), (0,334), (0,333).

Eine ähnlichste Farbtemperatur einer erfindungsgemäßen Entladungslampe liegt vorzugsweise oberhalb von in dieser Reihenfolge zunehmend bevorzugt 3.300, 3.350, 3.400 K und unterhalb von in dieser Reihenfolge zunehmend bevorzugt 3.800, 3.750, 3.700 K. Die Farbtemperatur liegt damit in etwa zwischen der warmweißer und neutralweißer Lichtquellen.

Die Erfindung bezieht sich auch auf die Verwendung einer erfindungsgemäßen Entladungslampe zum Beleuchten von Lebensmitteln, wobei die Vorteile der mit der erfindungsgemäßen Leuchtstoffmischung erzielten Farbwiedergabe bei der Beleuchtung von Fleisch- und Wurstwaren im Besonderen zum Tragen kommen.

### Kurze Beschreibung der Ausführungsbeispiele

Im Folgenden soll die Erfindung anhand von Ausführungsbeispielen näher erläutert werden; im Einzelnen zeigen:
Tabelle 1 die gew.-%-uale Zusammensetzung von vier unterschiedlichen Leuchtstoffmischungen;
Figuren 1-4 Emissionsspektren dieser vier Leuchtstoffmischungen;
Figur 5 einen Überlapp von BaMgAl₁₀O₁₇:Eu-Emission und Mg₄FGeO_{5,5}: Mn-Anregung;

Tabelle 2 eine Zusammenfassung von für die vier Leuchtstoffmischungen ermittelten Messwerten.

Tabelle 1 veranschaulicht den unterschiedlichen gew.-%-ualen Anteil verschiedener Leuchtstoffe an vier erfindungsgemäßen Leuchtstoffmischungen. Dabei sind die Anteile von Bariummagnesiumaluminat (blau) und Lanthanphosphat (grün) konstant gehalten, und in allen Leuchtstoffmischungen findet sich Yttriumoxid als roter Leuchtstoff, allerdings mit einem jeweils unterschiedlichen gew.-%-ualen Anteil.

Zur Ergänzung des roten Spektralbereichs ist der Leuchtstoffmischung I ein 30 gew.-%-iger Anteil Gadoliniumzinkmagnesiumpentaborat als tiefroter Leuchtstoff zugesetzt, der Leuchtstoffmischung III ein 35 gew.-%-iger Anteil.

In der Leuchtstoffmischung II ergänzt hingegen ein 14 gew.-%-iger Magnesiumfluorgermanatanteil den tiefroten Spektralbereich; die Leuchtstoffmischung IV enthält dann die beiden tiefroten Leuchtstoffe.

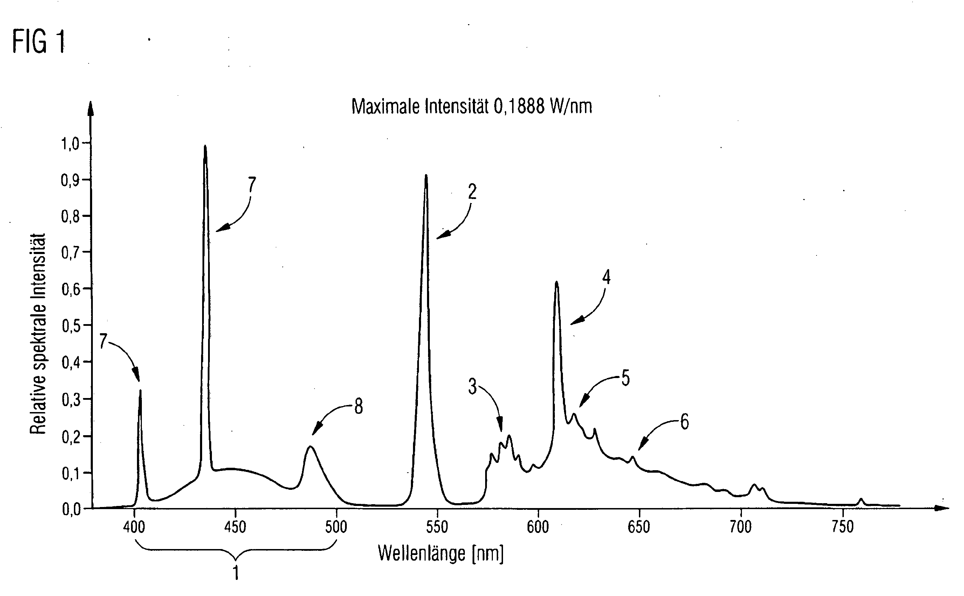

Figur 1 zeigt ein Emissionsspektrum der Leuchtstoffmischung I, wobei auf der Abszisse die Wellenlänge in Nanometern und auf der Ordinate die auf einen absoluten Maximalwert normierte spektrale Intensität aufgetragen sind.

Der Anteil des Bariummagnesiumaluminats ist als breitbandige Emission 1 zwischen 400 und 500 nm zu erkennen.

Der Lanthanphosphatleuchtstoff bewirkt eine Emission 2 bei etwa 550 nm, stützt also die Farbwiedergabe im Grünen.

Der Yttriumoxidanteil zeigt Emissionen 3 zwischen 570 und 600 nm, ein ausgeprägtes Maximum 4 bei etwa 610 nm sowie ein weiteres Maximum 5 bei etwa 620 nm und ist damit zusammen mit dem Bariummagnesiumaluminat für den Schönungseffekt maßgeblich. Dementsprechend wird mit dieser Leuchtstoffmischung ein spezieller Farbwiedergabeindex R₁₆ (Brühwurst, DIN 10504) von 72 erzielt.

Dieser Wert liegt noch oberhalb eines Grenzwerts von 65, der nach Möglichkeit nicht unterschritten werden sollte, um eine irreführende Überdeckung lebensmittelhygienischer Mängel zu verhindern. Dennoch ist auf dem Markt eine Tendenz hin zu Lampen mit einem noch geringeren R₁₆ zu erkennen.

Der rote Spektralbereich wird durch eine breitbandige Gadoliniumzinkmagnesiumpentaboratemission 6 zwischen etwa 610 und 720 nm ergänzt, wodurch sich ein spezieller Farbwiedergabeindex R₉ für gesättigtes Rot von 82 erzielen lässt; der allgemeine Farbwiedergabeindex Rₐ beträgt 84. Der Farbton hat im CIE-Normvalenzsystem für den 2°-Beobachter von 1931 einen X-Wert von 0,380 und einen Y-Wert von 0,320; die Farbtemperatur liegt bei 3442 K.

Die Lichtausbeute beläuft sich bei einer Lampenleistung von 28 W auf etwa 66 1m/W.

Die breitbandige Bariummagnesiumaluminatemission 1 wird von Quecksilberübergängen entsprechenden Maxima 7 bei etwa 404 und 435 nm überlagert; das Maximum 8 bei etwa 490 nm ist ein Nebenmaximum des mit Terbium dotierten Lanthanphosphats.

Die Bariummagnesiumaluminat-, Lanthanphosphat- und Yt-triumoxidemissionen sind bei den folgenden Spektren zumindest qualitativ zu Figur 1 identisch und werden nicht mehr im Detail erläutert.

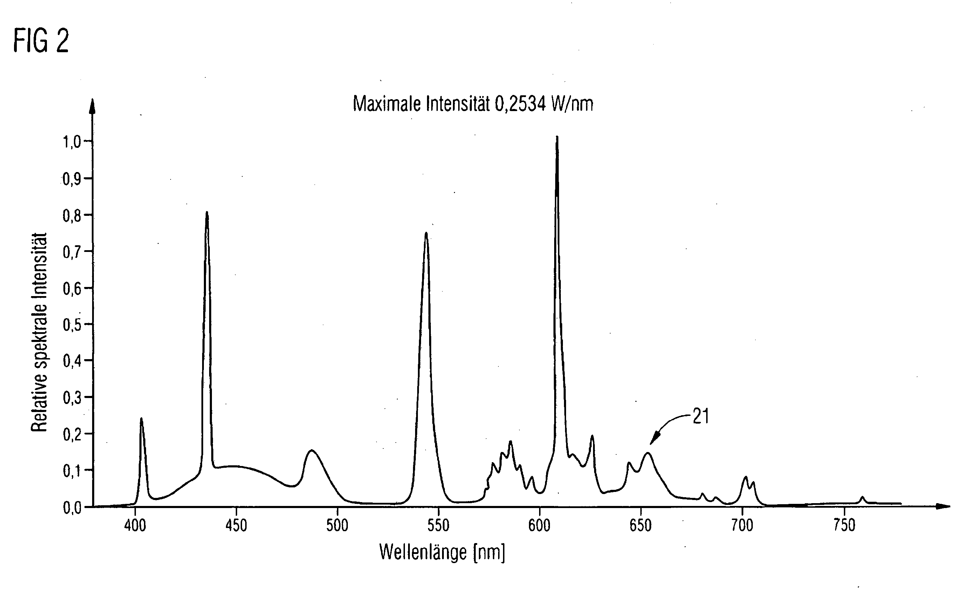

Das Spektrum in Figur 2 unterscheidet sich von jenem aus Figur 1 durch einen Magnesiumfluorgermanatbeitrag 21 zwischen etwa 650 und 670 nm, der anstelle der Gadoliniumzinkmagnesiumpentaboratemission den roten Spektralbereich ergänzt.

Mit dieser Leuchtstoffmischung II wird ein gegenüber dem ersten Spektrum verbesserter spezieller Farbwiedergabeindex R₉ für gesättigtes Rot von 90 erreicht. Der allgemeine Farbwiedergabeindex Rₐ sowie der spezielle Farbwiedergabeindex R₁₆ (Brühwurst) liegen hingegen nahezu unverändert bei 83 bzw. 73.

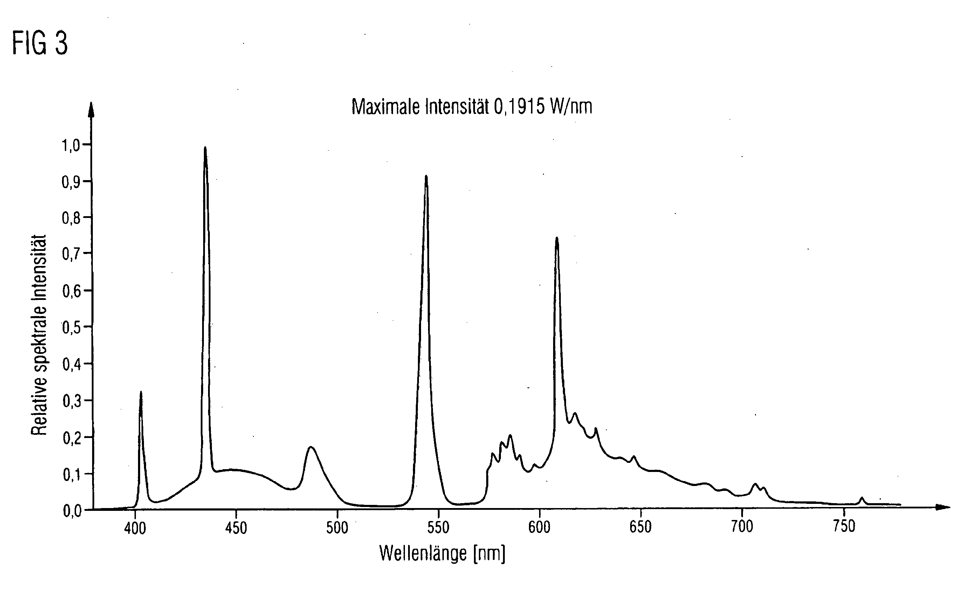

Das Spektrum der Leuchtstoffmischung III in Figur 3 zeigt eine gegenüber Figur 2 verringerte Intensität der Yttriumoxidemissionen, weil der Anteil an Yttriumoxid um 21 Gew.-% kleiner ist. Ferner ist in der Leuchtstoffmischung III analog zu der Leuchtstoffmischung I Gadoliniumzinkmagnesiumpentaborat als tiefroter Leuchtstoff vorgesehen, das eine breitbandige Emission zwischen etwa 610 und 720 nm zeigt.

Der allgemeine Farbwiedergabeindex Rₐ sowie der spezielle Farbwiedergabeindex R₁₆ (Brühwurst) sind mit 84 und 73 gegenüber den vorhergehenden Spektren im Wesentlichen unverändert; der spezielle Farbwiedergabeindex R₉ für gesättigtes Rot ist mit 85 größer als bei Leuchtstoffmischung I (Figur 1, R₉ = 83), jedoch noch deutlich kleiner als der mit Magnesiumfluorgermanat erzielte Wert (Figur 2, R₉ = 90).

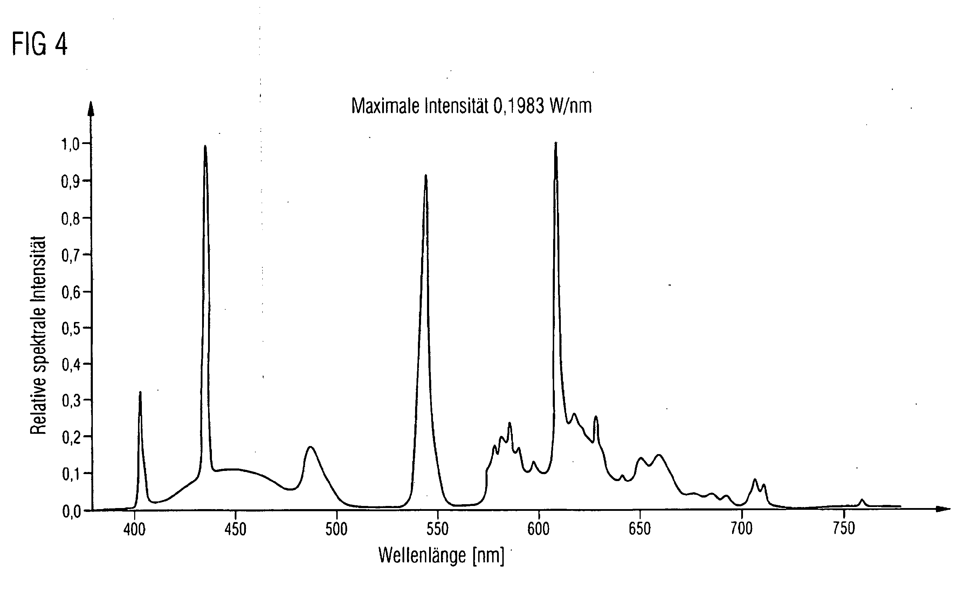

Die durch das Spektrum in Figur 4 charakterisierte Leuchtstoffmischung IV enthält im Gegensatz zu den vorhergehenden Ausführungsformen sowohl Gadoliniumzinkmagnesiumpentaborat als auch Magnesiumfluorgermanat als tiefroten Leuchtstoff. Dementsprechend ist eine Überlagerung der Magnesiumfluorgermanatemission (∼ 650 bis 670 nm, vergleiche Figur 2) und der Gadoliniumzinkmagnesiumpentaboratemission (∼ 610 bis 720 nm, vergleiche Figuren 1 und 3) zu erkennen.

Die Indizes für die allgemeine Farbwiedergabe sowie für die spezielle Farbwiedergabe von Brühwurst liegen wiederum bei 83 und 73. Die Farbwiedergabe für gesättigtes Rot ist mit 89 ähnlich hoch wie im Falle der Leuchtstoffmischung II. Es ist wiederum die vorteilhafte Kombination von Bariummagnesiumaluminat mit Magnesiumfluorgermanat, die sich zur Erzielung einer guten Wiedergabe von gesättigtem Rot besonders eignet.

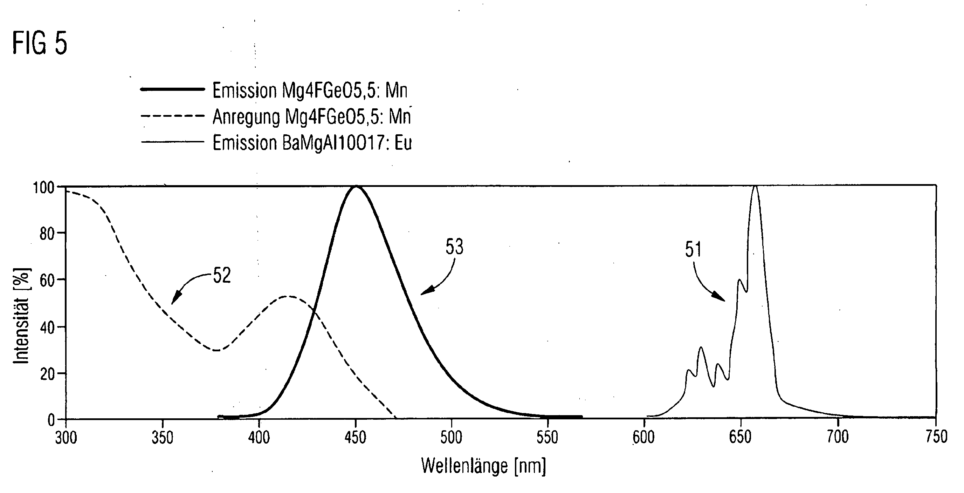

Figur 5 zeigt für Magnesiumfluorgemanat den spektralen Verlauf von Emission 51 und Anregung 52. Das Anregungsspektrum überlappt dabei mit dem Emissionsspektrum 53 von Bariummagnesiumaluminat, sodass einerseits dieses Emissionsspektrum durch eine Reabsorption verändert und andererseits die Anregung des Magnesiumfluorgemanats verstärkt wird. Durch diese Wechselwirkung kann eine besonders gute Farbwiedergabe von gesättigtem Rot (vergleiche Erläuterungen zu den Figuren 2 und 4) bei einer ebenfalls guten allgemeinen Farbwiedergabe erreicht werden.

In Tabelle 2 sind für die vier Leuchtstoffmischungen aus Tabelle 1 jeweils an einer Mehrzahl 28 W 16 mm Niederdruckentladungslampen gemessene und über die Mehrzahl Lampen gemittelte Werte zu der Lampenleistung, Lichtstrom und -ausbeute, Farbort und -temperatur sowie den Farbindizes Rₐ und R₉ zusammengefasst.

**Tab. 1**

| | Lampenleistung [W] | lichtstrom [Im] | Lichtausbeute [Im/W] | Farbort X | Farbort Y | Farbtemperatur [K] | Rₐ | R₉ |
|---|---|---|---|---|---|---|---|---|
| I | 28,1 | 1851,1 | 65,8 | 0,380 | 0,320 | 3442 | 83,5 | 82,2 |
| II | 28,1 | 2086,6 | 74,3 | 0,374 | 0,317 | 3634 | 82,9 | 89,7 |
| III | 28,2 | 1961,0 | 69,6 | 0,374 | 0,320 | 3665 | 83,5 | 85,3 |
| IV | 28,2 | 2006,5 | 71,2 | 0,376 | 0,320 | 3601 | 83,3 | 88,5 |

**Tab. 2**

| | Lampenleistung [W] | Lichtstrom [Im] | Lichtausbeute [Im/W] | Farbort X | Farbort Y | Farbtemperatur [K] | Rₐ | R₉ |
|---|---|---|---|---|---|---|---|---|
| I | 28,1 | 1851,1 | 65,8 | 0,380 | 0,320 | 3442 | 83,5 | 82,2 |
| II | 28,1 | 2086,6 | 74,3 | 0,374 | 0,317 | 3634 | 82,9 | 89,7 |
| III | 28,2 | 1961,0 | 69,6 | 0,374 | 0,320 | 3665 | 83,5 | 85,3 |
| IV | 28,2 | 2006,5 | 71,2 | 0,376 | 0,320 | 3601 | 83,3 | 88,5 |

## Patentansprüche

1. Leuchtstoffmischung für Leuchtstofflampen zur Beleuchtung von Lebensmitteln mit:
- einem roten Leuchtstoff mit einem Emissionsmaximum zwischen 590 und 630 nm bei einer Halbwertsbreite von höchstens 60 nm;
- einem grünen Leuchtstoff mit einem Emissionsmaximum zwischen 520 und 580 nm bei einer Halbwertsbreite von höchstens 60 nm;
- einem 5 bis 25 gew.-%-igen Anteil an mit Europium dotiertem Bariummagnesiumaluminat als blauem Leuchtstoff;
- einem zusätzlichen tiefroten Leuchtstoff mit einem Emissionsmaximum zwischen 630 und 680 nm bei einer Halbwertsbreite zwischen 10 und 150 nm, wobei der zusätzliche tiefrote Leuchtstoff mit Mangan dotiertes Magnesiumfluorgermanat mit einem 3 bis 20 gew.-%-igen Anteil an der Leuchtstoffmischung und mit Cerium und Mangan dotiertes Gadoliniumzinkmagnesiumpentaborat mit einem 8 bis 42 gew.-%-igen Anteil an der Leuchtstoffmischung ist.

2. Leuchtstoffmischung nach einem der vorstehenden Ansprüche, bei welcher der rote Leuchtstoff mit einem 10 bis 60 gew.-%-igen Anteil an der Leuchtstoffmischung jeweils mit Europium dotiertes Yttriumoxid und/oder Gadoliniumoxid und/oder ein Mischkristall der beiden ist.

3. Leuchtstoffmischung nach einem der vorstehenden Ansprüche, bei welcher der grüne Leuchtstoff mit einem 10 bis 40 gew.-%-igen Anteil an der Leuchtstoffmischung mit Terbium und Cerium dotiertes Lanthanphosphat und/oder mit Terbium dotiertes Cermagnesiumaluminat ist.

4. Entladungslampe mit einem Entladungsgefäß, in welchem Entladungslicht erzeugt werden kann, und einer Leuchtstoffmischung nach einem der vorstehenden Ansprüche zum Konvertieren des Entladungslichts.

5. Entladungslampe nach Anspruch 4, welche eine Niederdruckgasentladungslampe ist.

6. Entladungslampe nach Anspruch 5 mit einer Quecksilbermenge von höchstens 4 mg in dem Entladungsgefäß.

7. Entladungslampe nach einem der Ansprüche 4 bis 6 mit einer Lebensdauer von mindestens 16.000 Stunden.

8. Entladungslampe nach einem der Ansprüche 4 bis 7 mit einer Lichtausbeute von mindestens 60 1m/W.

9. Entladungslampe nach einem der Ansprüche 4 bis 8 mit einem allgemeinen Farbwiedergabeindex Rₐ von mindestens 75.

10. Entladungslampe nach einem der Ansprüche 4 bis 9 mit einem speziellen Farbwiedergabeindex R₉ für gesättigtes Rot von mindestens 83.

11. Entladungslampe nach einem der Ansprüche 4 bis 10, deren Farbton im CIE-Normvalenzsystem für den 2°-Beobachter von 1931 an einer X-Position zwischen 0,375 und 0,395 und einer Y-Position zwischen 0,315 und 0,335 liegt.

12. Entladungslampe nach einem der Ansprüche 4 bis 11 mit einer Farbtemperatur zwischen 3.300 und 3.800 K.

13. Verwendung einer Entladungslampe nach einem der Ansprüche 4 bis 12 zum Beleuchten von Lebensmitteln, insbesondere von Fleisch- und Wurstwaren.

## Claims

1. Luminophore mixture for fluorescent lamps for illumination of food and drink products, comprising:
- a red luminophore having an emission maximum between 590 and 630 nm at a half-height width of not more than 60 nm;
- a green luminophore having an emission maximum between 520 and 580 nm at a half-height width of not more than 60 nm;
- a 5 to 25% by weight fraction of europium-doped barium magnesium aluminate as blue luminophore;
- an additional deep red luminophore having an emission maximum between 630 and 680 nm at a half-height width between 10 and 150 nm, the additional deep red luminophore being manganese-doped magnesium fluorine germanate having a 3 to 20% by weight fraction of the luminophore mixture and cerium- and manganesedoped gadolinium zinc magnesium pentaborate having an 8 to 42% by weight fraction of the luminophore mixture.

2. Luminophore mixture according to the preceding claim, in which the red luminophore with a 10 to 60% by weight fraction of the luminophore mixture is europium-doped yttrium oxide and/or europium-doped gadolinium oxide and/or a co-crystal of the two.

3. Luminophore mixture according to either of the preceding claims, in which the green luminophore with a 10 to 40% by weight fraction of the luminophore mixture is terbium- and cerium-doped lanthanum phosphate and/or terbium-doped cerium magnesium aluminate.

4. Discharge lamp having a discharge vessel in which discharge light can be produced, and a luminophore mixture according to any of the preceding claims for conversion of the discharge light.

5. Discharge lamp according to Claim 4, which is a low-pressure gas discharge lamp.

6. Discharge lamp according to Claim 5 having an amount of mercury of not more than 4 mg in the discharge vessel.

7. Discharge lamp according to any of Claims 4 to 6 having a lifetime of at least 16 000 hours.

8. Discharge lamp according to any of Claims 4 to 7 having a light yield of at least 60 lm/W.

9. Discharge lamp according to any of Claims 4 to 8 having a general colour rendering index Rₐ of at least 75.

10. Discharge lamp according to any of Claims 4 to 9 having a specific colour rendering index R₉ for saturated red of at least 83.

11. Discharge lamp according to any of Claims 4 to 10, for which the colour shade in the CIE standard valence system to the 2° observer of 1931 is at an X position between 0.375 and 0.395 and a Y position between 0.315 and 0.335.

12. Discharge lamp according to any of Claims 4 to 11 having a colour temperature between 3300 and 3800 K.

13. Use of a discharge lamp according to any of Claims 4 to 12 for illumination of food and drink products, especially of meat products and sausage products.

## Revendications

1. Mélange de substances fluorescentes pour lampes fluorescentes en vue de l'éclairage de denrées alimentaires comprenant :
- une substance fluorescente rouge avec un maximum d'émission entre 590 et 630 nm pour une largeur de valeur moyenne d'au plus 60 nm ;
- une substance fluorescente verte avec un maximum d'émission entre 520 et 580 nm pour une largeur de valeur moyenne d'au plus 60 nm ;
- une proportion de 5 à 25 % en poids en aluminate de baryum-magnésium dopé à l'europium en tant que substance fluorescente bleue ;
- une substance fluorescente rouge foncé supplémentaire avec un maximum d'émission entre 630 nm et 680 nm pour une largeur de valeur moyenne entre 10 et 150 nm, la substance fluorescente rouge foncé supplémentaire étant du fluorogermanate de magnésium dopé au manganèse dans une proportion de 3 à 20 % en poids au niveau du mélange de substances fluorescentes et du pentaborate de gadolinium-zinc-magnésium dopé au cérium et au manganèse dans une proportion de 8 à 42 % en poids au niveau du mélange de substances fluorescentes.

2. Mélange de substances fluorescentes selon l'une des revendications précédentes, dans lequel la substance fluorescente rouge est dans une proportion de 10 à 60 % en poids au niveau du mélange de substances fluorescentes respectivement de l'oxyde d'yttrium et/ou de l'oxyde de gadolinium et/ou un cristal mixte des deux dopés à l'europium.

3. Mélange de substances fluorescentes selon l'une des revendications précédentes, dans lequel la substance fluorescente verte est dans une proportion de 10 à 40 % en poids au niveau du mélange de substances fluorescentes un phosphate de lanthane dopé au terbium et au cérium et/ou un aluminate de cérium-magnésium dopé au terbium.

4. Lampe à décharge comprenant un tube à décharge, dans lequel une lumière à décharge peut être générée, et un mélange de substances fluorescentes selon l'une des revendications précédentes en vue de la conversion de la lumière à décharge.

5. Lampe à décharge selon la revendication 4, qui est une lampe à décharge de gaz basse pression.

6. Lampe à décharge selon la revendication 5 comprenant une quantité de mercure d'au plus 4 mg dans le tube à décharge.

7. Lampe à décharge selon l'une des revendications 4 à 7 ayant une durée de vie d'au moins 16 000 heures.

8. Lampe à décharge selon l'une des revendications 4 à 7 ayant un rendement d'éclairage d'au moins 60 lm/W.

9. Lampe à décharge selon l'une des revendications 4 à 8 ayant un indice de rendu des couleurs général Rₐ d'au moins 75.

10. Lampe à décharge selon l'une des revendications 4 à 9 ayant un indice de rendu des couleurs particulier R₉ pour le rouge saturé d'au moins 83.

11. Lampe à décharge selon l'une des revendications 4 à 10, dont la nuance dans le système de valence des normes CIE pour l'observateur 2° est de 1931 au niveau d'une position X entre 0,375 et 0,395 et d'une position Y entre 0,315 et 0,335.

12. Lampe à décharge selon l'une des revendications 4 à 11 ayant une température des couleurs entre 3300 et 3800 K.

13. Utilisation d'une lampe à décharge selon l'une des revendications 4 à 12 en vue de l'éclairage de denrées alimentaires, en particulier des produits de boucherie et de charcuterie.
